(19) Europäisches Patentamt
European Patent Office
Office européen des brevets

(11) Veröffentlichungsnummer: **0 384 248 B1**

# (12) EUROPÄISCHE PATENTSCHRIFT

(45) Veröffentlichungstag der Patentschrift: **12.10.94**

(51) Int. Cl.5: **C08F 38/02**, G02B 1/08, G02B 5/30

(21) Anmeldenummer: **90102640.1**

(22) Anmeldetag: **10.02.90**

Die Akte enthält technische Angaben, die nach dem Eingang der Anmeldung eingereicht wurden und die nicht in dieser Patentschrift enthalten sind.

## (54) Hochwirksame Polarisatoren.

(30) Priorität: **23.02.89 DE 3905519**

(43) Veröffentlichungstag der Anmeldung:
**29.08.90 Patentblatt 90/35**

(45) Bekanntmachung des Hinweises auf die Patenterteilung:
**12.10.94 Patentblatt 94/41**

(84) Benannte Vertragsstaaten:
**BE CH DE FR GB IT LI NL SE**

(56) Entgegenhaltungen:
**EP-A- 0 210 498**
**EP-A- 0 374 626**
**DD-A- 141 076**
**DE-A- 3 334 181**
**DE-A- 3 617 502**
**EP-A- 0 249 019**
**EP-A- 0 374 627**
**DD-A- 210 342**
**DE-A- 3 403 493**

(73) Patentinhaber: **BAYER AG**

**D-51368 Leverkusen (DE)**

(72) Erfinder: **Ostoja Starzewski, Karl-Heinz Aleksander, Dr.**
**Jeschkenweg 10**
**D-6368 Bad Vilbel (DE)**

**EP 0 384 248 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft hochwirksame Polarisatoren aus polyacetylenhaltigen Polymerprodukten mit einer Matrix aus reinem Polyvinylalkohol (PVA), die ein hohes dichroitisches Verhältnis $Q_E$ bei gleichzeitig sehr hohem Polarisationsgrad P haben. Solche Polarisatoren werden als Folie eingesetzt.

Die Herstellung von Polarisationsfolien auf Basis von Polyvinylalkohol und Iod ist beispielsweise aus DD-A-141 076 bekannt. Dabei wird eine Polyvinylalkoholfolie nachträglich eingefärbt. Um einigermaßen befriedigende Ergebnisse zu erhalten, bedarf es komplizierter Herstellungs- und Nachbehandlungsverfahren. Dennoch ist in der Regel nur ein Teil der so erhaltenen Folie brauchbar. Die Herstellung solcher Polarisationsfolien ist in der Praxis neben Iod auf nur wenige dichroitisch hochwirksame Substanzen begrenzt.

Der Nachteil von mit Jod dotierten Folien besteht darin, daß das aggressive Jod aus der Folie migriert; der Nachteil der mit dichroitischen Substanzen dotierten Folien besteht darin, daß sie farbig sind und nur für einen engen Wellenlängenbereich eingesetzt werden können.

Verbesserte Polarisatoren auf der Basis von in Polymermatrices eingebundenem Polyacetylen sind ferner aus EP-A-249 019 bekannt (Siehe auch die am 27.06.90 veröffentlichen Anmeldungen EP-A-0 374 626 und EP-A-0 374 627, die gemäß Artikel 54(3) EPÜ als Stand der Technik gelten). Die daraus erhaltenen Folien zeigen bereits eine hohe optische Qualität. So wird beispielsweise nach der Polymerisation von Acetylen in einer Lösung von Polyvinylalkohol in DMF eine Polarisationsfolie erhalten, die nach einer Verstreckung auf das 4-fache eine lichtpolarisierende Wirkung von mehr als 90 % aufweist.

Diese aus der genannten EP-Anmeldung bekannten Folien zeigen jedoch für "high tech"-Anwendungen noch kein ausreichend hohes dichroitisches Verhältnis, das als der Quotient $Q_E$ der Extinktion in der Sperrstellung zur Extinktion in der Durchlaßstellung für linear polarisiertes Licht definiert ist. Die im Ausführungsbeispiel der genannten EP-Anmeldung genannte Folie ist rotbraun gefärbt.

Es wurden nun hochwirksame Polarisatoren aus polyacetylenhaltigen Polymerprodukten mit einer Matrix aus reinem Polyvinylalkohol (PVA) und mit einem maximalen Polarisationsgrad P von mindestens 95 % und einem dichroitischen Verhältnis $Q_E$ über nahezu den gesamten Wellenlängenbereich des sichtbaren Lichts von 400 bis 800 nm von $Q_E$ = Quotient der Extinktion in der Sperrstellung zur Extinktion in der Durchlaßstellung = 10 oder größer in der Form von verstreckten Folien gefunden.

Die polarisierende Wirkung setzt sich im nahen IR-und UV-Bereich fort.

Solche Polarisatoren werden als Folien eingesetzt ,bei denen eine Vorzugsrichtung durch Verstrecken erzeugt wird. Es wurde weiterhin gefunden, daß die hohe Wirksamkeit der erfindungsgemäßen Polarisatoren bei höheren Verstreckungsgraden verbessert werden kann. Die erfindungsgemäßen Polarisatoren haben einen Verstreckungsgrad $\epsilon$ von mehr als 300%, bevorzugt mindestens 500%, besonders bevorzugt mindestens 600%. Der Verstreckungsgrad $\epsilon$ ist hierbei durch den Quotienten

$$\epsilon = \frac{l - l_0}{l_0} \cdot 100$$

definiert, wobei l die Länge nach dem Verstrecken und $l_0$ die Länge vor dem Verstrecken darstellt.

Die erfindungsgemäßen hochwirksamen Polarisatoren haben neben dem genannten dichroitischen Verhältnis $Q_E$ = 10 oder größer zusätzlich einen hohen maximalen Polarisationsgrad P von mindestens 95 %, bevorzugt mindestens 98 %, besonders bevorzugt mindestens 99 %. Vielfach werden Polarsationsgrade von 99,5 und darüber erzielt. Die Maximalwerte von $Q_E$ erreichen Werte von 15 und darüber, bevorzugt 20 und darüber. Vielfach werden maximale $Q_E$-Werte über 30, sogar über 40 erreicht.

Der Polarisationsgrad P ist hierbei gegeben durch die Verknüpfung von Transmission linear polarisierten Lichts in Durchlaßstellung bzw. Sperrstellung (Transmiss. Durch. bzw. Sperr.):

$$P = \frac{\text{Transmiss. Durch.} - \text{Transmiss. Sperr}}{\text{Transmiss. Durch.} + \text{Transmiss. Sperr}} \cdot 100$$

Das dichroitische Verhältnis $Q_E$ ist als Quotient der Extinktion in der Sperrstellung zur Extinktion in der Durchlaßstellung definiert. Dieses Verhältnis gilt für eine bestimmte Wellenlänge und ist bei geeigneten dichroitischen Farbstoffen auf einen engen Wellenlängenbereich des sichtbaren Lichts beschränkt. Dies ist an der Eigenfarbe der mit Hilfe von dichroitischen Farbstoffen hergestellten Polarisatoren erkennbar; die genannten Stoffe sind noch dazu schwierig in gleichmäßiger Form über eine größere Fläche einer damit einzufärbenden Folie zu verteilen.

Demgegenüber zeigen die erfindungsgemäßen Polarisatoren einen hohen $Q_E$-Wert über nahezu den gesamten Bereich des sichtbaren Lichts und sind daher weitgehend farbneutral, was durch ihre graue Eigenfarbe erkennbar ist. Dies entspricht dem Wunsch, farbneutrale Polarisatoren mit hohem Hell- Dunkel-Kontrast zur Verfügung zu haben. Dies ist wichtig für optische Kommunikationsmittel, wie LCDs mit außen- oder innenliegender Polarisationsfolie, bei denen hohe Auflösung und gute Ablesbarkeit angestrebt werden.

Die hochwirksamen Polarisatoren gemäß Anspruch 1 sind herstellbar durch Polymerisation von Acetylen in der Lösung eines reinen PVA in Gegenwart eines Nickel-Katalysators, der erhalten wird durch Umsetzung einer Nickel-(0)-Verbindung oder einer Verbindung, die in situ in eine Nickel-(0)-Verbindung übergeführt werden kann, mit Phosphorverbindungen der Formeln

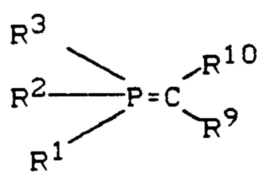

(I)

und

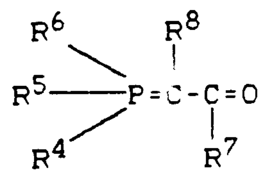

(II)

worin

| | |
|---|---|
| $R^1$, $R^2$ und $R^3$ | unabhängig voneinander $C_1$-$C_{20}$-Alkyl, $C_1$-$C_{20}$-Alkoxy, $C_3$-$C_8$-Cycloalkyl, $C_2$-$C_{20}$-Alkenyl, Di-$C_1$-$C_4$-alkylamino, $C_6$-$C_{12}$-Aryl, $C_6$-$C_{12}$-Aryloxy oder $C_7$-$C_{15}$-Aralkyl bedeuten, |
| $R^4$ | $C_6$-$C_{12}$-Aryl bedeutet, |
| $R^5$, $R^6$, $R^7$ und $R^8$ | unabhängig voneinander für $C_1$-$C_{20}$-Alkyl, $C_1$-$C_{20}$-Alkoxy, $C_2$-$C_{20}$-Alkenyl, $C_3$-$C_8$-Cycloalkyl, $C_6$-$C_{12}$-Aryl, oder $C_6$-$C_{12}$-Aryloxy stehen und zusätzlich |
| $R^7$ | Wasserstoff, |
| $R^8$ | Wasserstoff oder Acyl und |
| $R^9$ und $R^{10}$ | unabhängig voneinander Wasserstoff, Silyl, Acyl, Nitrophenyl, Cyano oder $R^1$ bedeuten können, |

oder Nickel-Katalysatoren, herstellbar durch Umsetzung einer Nickel-(O)-Verbindung oder einer Verbindung, die in situ in eine Nickel-(O)-Verbindung übergeführt werden kann, mit einem Addukt oder einem Gemisch aus einer chinoiden Verbindung und einem Phosphin der Formel

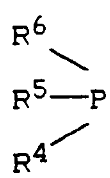

(III) ,

in der $R^4$, $R^5$ und $R^6$ die genannte Bedeutung haben,
und einer Verbindung der Formel (I).

In bevorzugter Weise werden Nickel-Katalysatoren eingesetzt, die erhalten werden durch Umsetzung einer Nickel-(O)-Verbindung oder einer Verbindung, die in situ in eine Nickel-(O)-Verbindung übergeführt werden kann, mit Phosphorverbindungen der Formeln

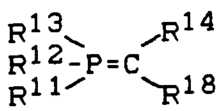 (IV) und 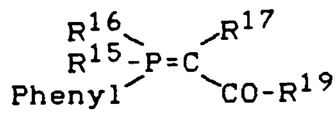 (V)

worin

- $R^{11}$, $R^{12}$ und $R^{13}$ unabhängig voneinander $C_1$-$C_8$-Alkyl, Phenyl oder Benzyl bedeuten,
- $R^{14}$ für Wasserstoff, $C_1$-$C_8$-Alkyl oder Phenyl steht,
- $R^{15}$, $R^{16}$ und $R^{17}$ unabhängig voneinander $C_1$-$C_8$-Alkyl oder Phenyl bedeuten, wobei $R^{17}$ zusätzlich Wasserstoff oder Acyl bedeuten kann,
- $R^{18}$ Wasserstoff oder Phenyl bedeutet und
- $R^{19}$ für Phenyl oder $C_1$-$C_4$-Alkyl steht,

oder Nickel-Katalysatoren, herstellbar durch Umsetzung einer Nickel-(O)-Verbindung oder einer Verbindung, die in situ in eine Nickel-(O)-Verbindung übergeführt werden kann, mit einem Addukt oder einem Gemisch aus Benzochinon und einem Phosphin der Formel

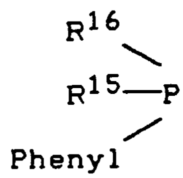 (VI) ,

in der $R^{15}$ und $R^{16}$ die genannte Bedeutung haben,
und einer Verbindung der Formel (IV).

In besonders bevorzugter Form wird die Acetylen-Polymerisation in Gegenwart von Nickel-Katalysatoren durchgeführt, die herstellbar sind durch Umsetzung einer Nickel-(O)-Verbindung oder einer Verbindung, die in situ in eine Nickel-(O)-Verbindung übergeführt werden kann, mit Verbindungen der Formeln

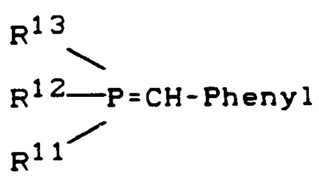 (VII) und 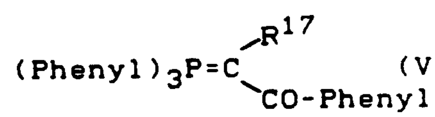 (VIII),

worin
$R^{11}$, $R^{12}$, $R^{13}$ und $R^{17}$ die oben genannte Bedeutung haben,
oder Nickel-Katalysatoren, herstellbar durch Umsetzung einer Nickel-(O)-Verbindung oder einer Verbindung, die in situ in eine Nickel-(O)-Verbindung übergeführt werden kann, mit einem Addukt oder einem Gemisch aus Benzochinon und Triphenylphosphin und einer Verbindung der Formel (VII).

Zur Herstellung des Katalysators werden pro Mol Nickel-(O)-Verbindung 1-4 Mol der Verbindung der Formel (I) bzw. (IV) bzw. (VII) und 1-4 Mol der Verbindung der Formel (II) bzw. (V) bzw. (VIII), bevorzugt pro Mol der Nickel-(O)-Verbindung etwa 1 Mol der Verbindung der Formel (I) bzw. (IV) bzw. (VII) und etwa 1 Mol der Verbindung der Formel (II) bzw. (V) bzw. (VIII) eingesetzt. Gleiche molare Verhältnisse gelten, wenn an Stelle einer Verbindung der Formel (II) bzw (V) bzw. (VIII) ein Chinon/Phosphin-Addukt oder -Gemisch der beschriebenen Art tritt.

Die Temperatur zur Herstellung des Katalysators beträgt 0 bis 100 °C, bevorzugt 20 bis 70 °C. Bei der Herstellung wird unter Ausschluß von Sauerstoff, vorzugsweise in einem Lösungsmittel, das gegenüber den Reaktanden inert sein muß, wie Benzol, Toluol, Cyclohexan oder n-Hexan, gearbeitet. Nach seiner Herstellung wird der Katalysator als Feststoff gewöhnlich durch Filtrieren isoliert, wobei man nach Bedarf die Lösung zuvor einengt und/oder abkühlt. Der Katalysator kann jedoch auch ohne Isolierung, d.h. als Lösung, direkt zur Polymerisation von Acetylen eingesetzt werden.

Als Nickel-(0)-Verbindungen seien beispielhaft Ni(cyclooctadien)$_2$ und Ni(allyl)$_2$ genannt. Als Nickelverbindungen, die in situ in Nickel-(0)-Verbindungen übergeführt werden können, seien beispielsweise genannt: Ni-acetylacetonat, Ni-octanoat und Ni-stearat, die mit Hilfe von üblichen Reduktionsmitteln, wie

Boranat, Alanat, Aluminiumalkylen oder Lithiumorganylen, reduziert werden können.

Als Alkyl, bevorzugt $C_1$-$C_8$-Alkyl, das geradkettig oder verzweigt sein kann, sei beispielsweise genannt: Methyl, Ethyl, Propyl, Isopropyl, Butyl, Isobutyl, tert.-Butyl, die isomeren Amyle, Hexyle, Octyle, Decyle, Dodecyle, Hexadecyle und Eicosyle. Besonders bevorzugtes Alkyl hat 1-4 C-Atome.

Als $C_1$-$C_{20}$-Alkoxy, das geradkettig oder verzweigt sein kann, sei beispielsweise genannt: Methoxy, Ethoxy, Propoxy, Isopropoxy, Butoxy, Isobutoxy, tert.-Butoxy, die isomeren Amyloxy, Hexyloxy, Octyloxy, Decyloxy, Dodecyloxy, Eicosyloxy. Bevorzugtes Alkoxy hat 1-8 C-Atome, besonders bevorzugtes 1-4 C-Atome.

Als $C_3$-$C_8$-Cycloalkyl sei beispielsweise genannt: Cyclopropyl, Cyclobutyl, Cyclopentyl, Cyclohexyl, Methyl-cyclopentyl, Methyl-cyclohexyl, Cycloheptyl, Cyclooctyl.

Als $C_6$-$C_{12}$-Aryl sei beispielsweise genannt: Phenyl, Naphthyl, Biphenylyl. Bevorzugtes Aryl ist Phenyl.

Als $C_2$-$C_{20}$-Alkenyl sei beispielsweise genannt: Vinyl, Propenyl, Allyl, Butenyl, Pentenyl, Hexenyl, Octenyl, Decenyl oder Eicosenyl sowie deren verzweigte Isomere.

Als $C_6$-$C_{12}$-Aryloxy sei beispielsweise genannt: Phenoxy, Naphthyloxy, Biphenyloxy. Bevorzugt ist Phenoxy.

Als $C_7$-$C_{15}$-Aralkyl sei beispielsweise genannt: Benzyl, Phenylethyl, Phenylpropyl, Naphthyl-methyl, bevorzugt Benzyl.

Als Di($C_1$-$C_4$-alkyl)-amino sei beispielsweise genannt: Dimethylamino, Diethylamino, Dipropylamino, Methylbutylamino, Ethyl-butyl-amino u.a.

Als Silyl sei beispielsweise Tri-$C_1$-$C_4$-alkyl-silyl, Triphenylsilyl oder gemischte trisubstituierte Alkylphenyl-silyle, bevorzugt Tri-$C_1$-$C_4$-alkyl-silyle, wie Trimethylsilyl, Triethylsilyl und andere genannt.

Als Acyl sei $C_1$-$C_8$-Alkylcarbonyl oder $C_6$-$C_{12}$-Arylcarbonyl genannt, die in der unten genannten Weise substituiert sein können, wie Acetyl, Propionyl, Butyryl, $C_5$-Alkyl-carbonyl, $C_8$-Alkyl-carbonyl, Benzoyl, substituiertes Benzoyl oder Naphthyl-carbonyl. Bevorzugtes Acyl ist substituiertes oder nicht substituiertes $C_1$-$C_4$-Alkyl-carbonyl oder Benzoyl. Besonders bevorzugt sind Acetyl oder Benzoyl.

Die genannten Substituenten können ein- bis dreifach, bevorzugt ein- oder zweifach, besonders bevorzugt einfach durch $C_1$-$C_4$-Alkyl, durch $C_1$-$C_4$-Alkoxy, durch $C_6$-$C_{12}$-Aryl, durch $C_6$-$C_{12}$-Aryloxy oder Nitro, bevorzugt durch $C_1$-$C_4$-Alkyl, durch $C_1$-$C_4$-Alkoxy, durch Phenyl oder Phenoxy substituiert sein, wobei bei mehrfacher Substitution die Substituenten verschiedene aus der genannten Aufzählung sein können.

Als chinoide Verbindungen kommen o- oder p-chinoide Verbindungen der Benzol- und Naphthalinreihe sowie Antrachinone in Frage, die noch in der oben beschriebenen Weise substituiert sein können. Beispielhaft seien p-Benzochinon, 1,4-Naphthochinon und 9,10-Antrachinon genannt.

Bevorzugte Reste $R^1$, $R^2$ und $R^3$ sind $C_1$-$C_6$-Alkyl, Cyclohexyl, Phenyl, Tolyl, Benzyl, Di-$C_1$-$C_4$-alkylamino, Phenoxy und $C_1$-$C_4$-Alkoxy.

$R^4$ ist vorzugsweise Phenyl.

$R^5$, $R^6$, $R^7$ und $R^8$ sind vorzugsweise Cyclohexyl, Phenyl, Tolyl, Benzyl, Vinyl und $C_1$-$C_4$-Alkyl.

$R^7$ ist darüber hinaus bevorzugt Wasserstoff oder $C_1$-$C_4$-Alkoxy, $R^8$ darüber hinaus bevorzugt Wasserstoff, Acetyl oder Benzoyl.

$R^9$ und $R^{10}$ sind vorzugsweise Wasserstoff, $C_1$-$C_6$-Alkyl, Phenyl, $C_1$-$C_6$-Alkenyl und Phenyl-$C_2$-$C_6$-Alkenyl.

Die zur Acetylenpolymerisation eingesetzte Menge des Nickel-Katalysators ist nicht kritisch. Typische Katalysatorkonzentrationen liegen bei $10^{-1}$ bis $10^{-5}$, bevorzugt $10^{-2}$-$10^{-4}$, besonders bevorzugt $0{,}5 \cdot 10^{-3}$ bis $5 \cdot 10^{-3}$ Mol Nickel-Katalysator pro Liter Polymerisationsansatz.

Die Polymerisation des Acetylens kann sowohl kontinuierlich als auch diskontinuierlich durchgeführt werden. Hierbei wird eine Temperatur von 20-120 °C, bevorzugt 20 bis 100 °C, besonders bevorzugt 20-80 °C, eingehalten.

Die Polymerisation kann bei Normaldruck durchgeführt werden, jedoch ist auch eine Polymerisation unter erhöhtem Druck, gegebenenfalls im Gemisch mit Inertgas, wie $N_2$, beispielsweise bei 1,01 bis 20 bar, möglich. Das Acetylen kann ohne weitere Reinigung aus einer Druckflasche entnommen und verwendet werden. Bei acetonempfindlichen Katalysatoren kann es erforderlich sein, im Acetylen etwa enthaltenes Aceton zuvor in einer Kühlfalle auszufrieren.

Die Acetylen-Polymerisation wird in einer Lösung von reinem Polyvinylalkohol (PVA) durchgeführt. Als reiner PVA sei ein solcher verstanden, bei dem mehr als 90 bis 100%, bevorzugt 95-100% aller (Co)-Monomeren des Polymer Vinylalkoholeinheiten sind. Der Rest zu 100 % aller Monomereinheiten besteht aus Monomereinheiten, wie Ethylen, Vinylacetat, Vinyltrifluoracetat und anderen für solche Copolymeren bekannten Comonomereinheiten. Diese Copolymeren können als vorwiegend taktische oder ataktische polymere vorliegen. Der erfindungsgemäß einzusetztende reine PVA kann beispielsweise durch Copolymerisation von mehr als 90 bis 100 %. Vinylacetateinheiten mit weniger als 10 bis 0 Ethyleneinheiten und vollständige Verseifung aller Vinylacetateinheiten hergestellt werden. Er kann aber auch durch Polymerisattion von Vinylacetat oder Vinyltrifluoracetat und Verseifung von mehr als 90 bis 100 % aller Estergruppen hergestellt werden. In der industriellen Praxis wird PVA durch Verseifung von Polyvinylacetat zum gewünschten Grad hergestellt.

Als Lösungsmittel für PVA kommen cyclische, N-alkylsubstituierte Säureamide (Lactame) oder cyclische, N,N′-dialkylsubstituierte Harnstoffe in Frage. Diese cyclischen Verbindungen haben 5-7 Ringglieder. Als Alkylsubstituenten seien $C_1$-$C_4$-Alkylgruppen, bevorzugt Methyl oder Ethyl, besonders bevorzugt Methyl genannt. Beispielsweise für solche Lösungsmittel sind N-Methylpyrrolidon (NMP), N-Ethyl-pyrrolidon, N-Propylpyrrolidon N-Butyl-pyrrolidon, N-Methyl-piperidin-2-on, N-Methyl-caprolactam (NMC), N,N′-Dimethylimidazolin-2-on, N,N′-Trimethylen-N,N′-dimethyl-harnstoff, N,N′-Tetramethylen-N,N′-dimethyl-harnstoff u.a. Solche Lösungsmittel können einzeln oder als Gemisch mehrerer von ihnen eingesetzt werden. Bevorzugt wird NMP eingesetzt.

Die genannten Lösungsmittel können ferner zu 0,1 bis 50 Gew.-% durch weitere Lösungsmittel, wie Dimethylformamid (DMF), Diethylformamid, Dimethylsulfoxid (DMSO) o.a. substituiert sein. Ferner ist es zulässig, daß solche Lösungsmittel oder deren Gemische Wasser im Prozentbereich, beispielsweise zu 0,001 bis 5 Gew.-%, enthalten, ohne daß der Katalysator desaktiviert wird. Bevorzugt ist der $H_2O$-Gehalt jedoch so niedrig wie möglich und geht besonders bevorzugt gegen den Wert Null.

Zur Herstellung der erfindungsgemäßen hochwirksamen Polarisatoren wird die Acetylen-Polymerisation in einer Zeit von 5-1000 sec., bevorzugt 5-600 sec., durchgeführt.

Die Eigenschaften der polyacetylenhaltigen Polymerprodukte sind vereinbar mit einem Strukturmodell, bei dem Polyacetylenseitenäste auf die Polymermatrix aufgepfropft sind.

Die erfindungsgemäßen Polarisatoren werden in Form von Folien nach der Gießtechnik oder der Extrusionstechnik hergestellt, die anschließend verstreckt werden. Zum Gießen können auch polyacetylenhaltige Polymerlösungen mit nichtpolyacetylenhaltigen Ausgangspolymerlösungen oder mit anderen polyacetylenhaltigen Polymerlösungen verschnitten werden.

Die Polarisationsfolie kann beispielsweise durch Verstrecken einer Koagulationsfolie erhalten werden. Hierbei wird nach dem Gießvorgang das Lösungsmittel nicht durch Abdampfen (bei Raumtemperatur oder höherer Temperatur und/oder erniedrigtem Druck) entfernt, sondern durch Kontakt mit einem Fällungsmittel, in das das Lösungsmittel der Polymerisations-(Gieß-)lösung hineinwandert, woraufhin nur das im allgemeinen leichter flüchtige Fällungsmittel abgedampft werden muß.

Fällungsmittel sind beispielsweise Toluol, Cyclohexan, Aceton, Methanol, Ethanol und weitere, in denen PVA nicht löslich ist.

Das polyacetylenhaltige Polymerprodukt kann jedoch auch aus der Polymerisationslösung mit einem der genannten Fällungsmittel gefällt und in üblicher Weise als Feststoff isoliert werden.

Das feste polyacetylenhaltige Polymerprodukt ist erneut in einem der für die Polymerisation genannten Lösungsmittel oder in Wasser löslich und kann aus einer solchen Lösung zu Folien vergossen werden.

Es kann wünschenswert sein, der Gießlösung einen dem Fachmann bekannten Weichmacher zuzusetzen Als übliche und geeignete Weichmacher können z.B. Glycerin oder Ethylenglykol in üblichen Mengen wie etwa 1-50 %, bezogen auf PVA, eingesetzt werden. Derartige Zusätze sind besonders dann günstig, wenn das ausgefällte polyacetylenhaltige Polymerprodukt aus einer wäßrigen Gießlösung verarbeitet wird

Die oben genannten maximalen $Q_E$-Werte können in Abhängigkeit von Polymerisationsparametern, wie Zeit, Temperatur, Katalysatorzusammensetzung u.a., insbesondere jedoch von der Katalysatorzusammensetzung, in verschiedene Bereiche des sichtbaren Lichts fallen. Es kann nun wünschenswert sein, den Bereich des maximalen $Q_E$-Wertes dadurch zu verbreitern, daß mehr als ein Katalysator der oben beschriebenen Art zur Polymerisation eingesetzt wird und dadurch mehrere $Q_E$-Maxima erzeugt werden. Ein prinzipiell gleicher Effekt wird durch Verschneiden von Polymerlösungen oder ausgefällten Polymeren, die mit verschiedenen Katalysatoren oder unter verschiedenen Polymerisations-Bedingungen hergestellt wurden, erreicht.

Die erfindungsgemäßen Polarisatoren können durch ein- oder beidseitiges Aufbringen von Adhäsionsschichten, die Deckschichten tragen können, zu Laminaten verarbeitet werden und sind in dieser Form vor mechanischer und chemischer Beschädigung geschützt. Der Ordnungsgrad einer verstreckten Polarisationsfolie wird durch die Laminierung nicht gestört. Die Erfindung betrifft daher auch diese spezielle Ausgestaltung der beschriebenen Polarisatoren.

Während bei vielen Laminaten mechanische Werte wie Festigkeit, Energieaufnahmevermögen (Sicherheitsgläser) und allgemein eine ausreichende Haftung der Laminatbestandteile im Vordergrund steht, kommen bei der Laminierung der erfindungsgemäßen hochwirksamen Polarisatoren weitere Forderungen hinzu, nämlich

1) eine hohe Lichtdurchlässigkeit, wobei sämtliche Trübungserscheinungen ausgeschlossen werden müssen,

2) ein hohes Maß an Lichtechtheit

3) Schutz der polarisierenden Kernschicht vor chemischen Umwelteinflüssen und

4) Verträglichkeit der Adhäsionsschichten und gegebenenfalls der Deckschichten mit der polarisierenden Kernschicht ohne Beeinträchtigung der optischen Eigenschaften.

Als Deckschichten kommen beispielsweise aromatische Polyester, Polyacrylnitrile, Poly(meth)acrylate, Polysulfone, aromatische Polycarbonate, Celluloseacetate, Celluloseacetobutyrate, Polyamide, Polyhydantoine, Polyimide, Polyamidimide, Polyparaphenylenbenzo-bis-imidazole und -oxazole, Polyetherketone und mineralische Gläser in Frage, wobei besonders die Polyester, Polyacrylate, Polycarbonate, Celluloseester und mineralische Gläser zu nennen sind. Die Transparenz dieser Materialien ist ihr wichtigstes Merkmal. Sie werden im allgemeinen als dünne Platten oder als Folien eingesetzt.

Als Adhäsionsschichten kommen dünne Schichten aus verklebungsfähigen Materialien in Frage, die die optischen Eigenschaften des Gesamtlaminats nicht beeinträchtigen, die geeignet sind, die Kernschicht und die Deckschichten mit ausreichender Klebekraft zu verbinden, und die ferner keine unerwünschte Veränderung in den Deckschichten und in der polarisierenden Kernschicht, insbesondere in der polarisierenden Kernschicht, hervorrufen. Hierfür kommen lösungsmittelfreie oder lösungsmittelhaltige Systeme in Betracht. Insbesondere für die lösungsmittelhaltigen Systeme ist die Forderung wichtig, keine chemischen Veränderungen im Inneren der Deckschichten und der polarisierenden Kernschicht hervorzurufen.

Als solche Adhäsionsmaterialien, die dem Fachmann grundsätzlich bekannt sind, seien beispielsweise genannt: mit Aminen, Säureanhydriden oder Polyamiden aushärtende Epoxidharze; Acrylatsysteme, die monomere und oligomere Systeme mit Vinylgruppen sein können, die nach dem Aufbringen der Deckschicht thermisch, radikalisch oder photochemisch gehärtet werden können; Mischungen von Polyacrylaten mit Phenolharzen, die in Lösung aufgebracht werden; Isocyanatklebstoffe und Polyurethane.

Die als Adhäsionsschichten einzusetzenden Klebematerialien können beispielsweise durch Aufgießen einer Lösung dieses Adhäsionsmaterials auf die polarisierende Kernschicht und Abdampfen des Lösungsmittels aufgebracht werden. Die so auf einer oder beiden Seiten mit Adhäsionsschichten versehene polarisierende Kernschicht kann dann mit den Deckschichten verbunden werden.

Ebenso kann auch umgekehrt verfahren werden und zunächst Adhäsionsmaterial auf die Deckschicht(en) aufgebracht werden, woraufhin wiederum ein Zusammenfügen der mit Adhäsionsschichten versehenen Deckschichten mit der polarisierenden Kernschicht vorgenommen wird. Die Dicke der einzelnen Schichten ist in außerordentlich weiten Grenzen einstellbar und nicht erfindungswesentlich. Für die Adhäsionsschichten seien Dicken von 0,5 bis 50 µm, bevorzugt 0,5 bis 20 µm, und für die Deckschichten Dicken von 5 µm bis 1 mm, bevorzugt 5 bis 100 µm, genannt. Bei den Deckschichten kann es sich aber auch um optische Linsen oder Prismen mit größeren Dicken handeln Die Kernschicht kann 1 bis 100 µm, bevorzugt 5 bis 50 µm dick sein.

Die erfindungsgemäße Polarisatorfolie, aber auch Adhäsions- bzw. Deckschichten können ferner mit den dem Fachmann bekannten Stabilisatoren, wie UV-Absorbern, HALS-Typen und Radikalfängern gegen UV-Strahlung, chemischen oder thermischen Abbau stabilisiert werden; als typische Stabilisatoren sei hierfür Ionol® und Bayer UV 340® genannt, die aber durch viele andere Stabilisatoren ersetzt oder ergänzt werden können. Hierbei tritt keine Minderung der optischen Qualität der Polarisationsfolie ein.

## Beispiel 1

### Katalysatorherstellung

36 mmol Bis-cyclooctadien-nickel(O) in 250 ml trockenem argongesättigtem Toluol wurden unter Argon mit 36 mmol 4-Hydroxy-6-(triphenylphosphoranyliden)cyclohexa-2,4-dien-1-on und 36 mmol Triisopropylphosphinbenzyliden gemischt. Unter intensivem Rühren erwärmte man ca. 1h auf 60 °C. Die dunkelbraune Reaktionsmischung wurde im Vakuum bis zur Trockene eingeengt. Der so erhaltene Roh-Katalysator wurde bei 60 °C in Dimethylformamid (DMF) gelöst und anschließend mit Toluol/Hexan ausgefällt, der Überstand abdekantiert und der Rückstand im Vakuum getrocknet.

Beispiel 2

Polyvinylalkohol-polyacetylen (PVA - PAC)

In einem 250 ml Reaktionskolben (Gaseinleitung, Rührer, Innenthermometer, Blasenzähler) wurden unter Inertgas 5 g Polyvinylalkohol (PVA; Verseifungsgrad des Polyvinylacetats 99 %) in 95 g trockenem NMP (entgast, Argon-gesättigt) bei ca 120 °C gelöst und dann auf 40 °C temperiert. Anschließend wurden 0,2 mmol des vorstehend beschriebenen Katalysators, gelöst in 2 ml NMP, unter Argon eingerührt und ein gleichmäßiger Strom von Acetylengas, der durch eine mit Trockeneis/Aceton gekühlte Kühlfalle geleitet worden war, während 30 Sekunden in die PVA-NMP Katalysator-Mischung eingeleitet.

Die entstandene blaue PVA-PAC Lösung (Absorptionsmaximum 610 nm) wurde in 500 ml Aceton ausgefällt, mit Aceton gewaschen und im Hochvakuum bei Raumtemperatur getrocknet. Der Feststoff wurde 8 %ig in Wasser während 1h bei ca. 90 °C gelöst und 0,5 g Glycerin pro 100 ml Lösung zugegeben. Die ebenfalls blaue wäßrige Lösung wurde durch ein Polyamid-Tuch von 100 µm Maschenweite filtriert und auf einer fettfreien Glasplatte mit einem Rakel in einer Schicht von 500 µm ausgestrichen. Nach Verdunsten des Wassers erhielt man eine dunkel-blaue Folie, die von der Unterlage abgezogen und bei ca 145 °C auf $\epsilon$ = 700 % gereckt wurde.

Die gereckte hochtransparente, hellgraue Folie wies bei 600 nm einen Polarisationsgrad von 99,7 % auf.

| | |
|---|---|
| $Q_E$ max | 35,6 |
| $Q_E \geqq 20$ bei | 500-770 nm |
| $Q_E \geqq 10$ bei | 430-800 nm |
| P ≧ 99 % bei | 475-730 nm |
| P ≧ 95 % bei | 440-745 nm |

Die obigen optometrischen Daten wurden routinemäßig mit Hilfe eines Spektralphotometers, Typ Uvikon 810 P der Firma Kontron ermittelt. Um das exzellente Extinktionsverhalten der erfindungsgemäßen Polarisationsfolien in Sperrstellung auch für hohe Extinktionen zwischen Werten von 3 bis etwa 5,7 weitgehend bestimmen zu können (die oberhalb des Meßbereiches des Uvikon 810 P liegen), wurden einige Nachmessungen mit einem Spektralphotometer, Typ PM Q II der Firma Zeiss durchgeführt, wobei die Spitzenwerte von P und $Q_E$ noch höher gefunden wurden als bei der Routinemessung.

Bei dieser Nachmessung ergaben sich folgende optometrische Daten:

| | |
|---|---|
| P | 100 % bei 600 nm |
| $Q_E$ max | 43,8 |
| $Q_E \geqq 20$ bei | 490-770 nm |
| $Q_E \geqq 10$ bei | 430-800 nm |
| P ≧ 99 % bei | 470-720 nm |
| P ≧ 95 % bei | 440-745 nm |

Beispiele 3 und 4

Analog Beispiel 2 wurden Polarisationsfolien hergestellt, deren Herstellungsbedingungen und Eigenschaften in der folgenden Tabelle zusammengestellt sind

<u>Tabelle</u>: Beispiele 3 und 4, Herstellung und Eigenschaften von Polarisationsfolien

| Beispiel Nr. | Katalysator | Kat.-Menge pro 5 g PVA (mmol) | PVA-Konz. in NMP (%) | Polymerisations- Temp. °C | Polymerisations- Zeit sec. |
|---|---|---|---|---|---|
| 3 | $NiPh(Ph_2PCHCMeO)(Pr^i_3PCHPh)$ | 0,2 | 5 | 30° | 30 |
| 4 | $NiPh(Ph_2PCHCPhO)(Ph_3PCH_2)$ | 0,2 | 5 | 40° | 30 |

Me = Methyl, $Pr^i$ = iso-Propyl, Ph = Phenyl

Tabelle: Beispiele 3 und 4, Herstellung und Eigenschaften von Polarisationsfolie

| Beispiel | Verstreckungsgrad ε % | $Q_E \geq 10$ im Wellenlängenbereich nm | $Q_E$ max | $P \geq 95$ % im Wellenlängenbe- ich | $P_{max}$ % |
|---|---|---|---|---|---|
| 3 | 764 | 440-740 | 31.3 bei 600 nm | 530-640 | 97,9 |
| 4 | 746 | 690->800 | 27.1 bei 800 nm | 400-800 | 99,9 |
| 4* | 746 | <400->800 | 35,7 bei 780 nm | <400->800 | 100 |

* Nachmessung mit Hilfe des Spektralphotometers Typ PM Q II der Fa. Zeiss.

## Patentansprüche

1. Polarisatoren, herstellbar durch Polymerisation von Acetylen bei 20-120 °C während einer Zeit von 5-1000 sec. in einer Lösung von Polyvinylalkohol in Gegenwart eines Nickel-Katalysators, der erhalten wird durch Umsetzung einer Nickel-(0)-Verbindung oder einer Verbindung, die in situ in eine Nickel-(0)-Verbindung übergeführt werden kann, mit Phosphorverbindungen der Formeln

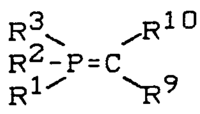 und 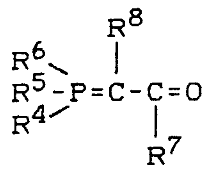 ,

I) II)

worin

| | |
|---|---|
| $R^1$, $R^2$ und $R^3$ | unabhängig voneinander $C_1$-$C_{20}$-Alkyl, $C_1$-$C_{20}$-Alkoxy, $C_3$-$C_8$-Cycloalkyl, $C_2$-$C_{20}$-Alkenyl, Di-$C_1$-$C_4$-Alkylamino, $C_6$-$C_{12}$-Aryl, $C_6$-$C_{12}$-Aryloxy oder $C_7$-$C_{15}$-Aralkyl bedeuten, |
| $R^4$ | $C_6$-$C_{12}$-Aryl bedeutet, |
| $R^5$, $R^6$, $R^7$ und $R^8$ | unabhängig für $C_1$-$C_{20}$-Alkyl, $C_1$-$C_{20}$-Alkoxy, $C_2$-$C_{20}$-Alkenyl, $C_3$-$C_8$-Cycloalkyl, $C_6$-$C_{12}$-Aryl oder $C_6$-$C_{12}$-Aryloxy stehen und zusätzlich |
| $R^7$ | Wasserstoff, |
| $R^8$ | Wasserstoff oder Acyl und |
| $R^9$ und $R^{10}$ | unabhängig voneinander Wasserstoff, Silyl, Acyl, Nitrophenyl, Cyano oder $R^1$ bedeuten können, |

oder Nickel-Katalysatoren, herstellbar durch Umsetzung einer Nickel-(O)-Verbindung oder einer Verbindung, die in situ in eine Nickel-(O)-Verbindung übergeführt werden kann, mit einem Addukt oder einem Gemisch aus einer chinoiden Verbindung und einem Phospin der Formel

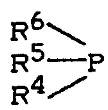 ,

in der $R^4$, $R^5$ und $R^6$ die genannte Bedeutung haben,
und einer Verbindung der Formel I), Verarbeitung des Polymerisats zu Folien und Verstreckung derselben, dadurch gekennzeichnet, daß die Lösung von Polyvinylalkohol aus einer Lösung eines reinen Polyvinylalkohols in cyclischen, N-alkylsubstituierten Lactamen oder cyclischen N,N'-dialkylsubstituierten Harnstoffen als Lösungsmittel besteht.

**2.** Polarisatoren nach Anspruch 1, dadurch gekennzeichnet, daß in Gegenwart eines Nickel-Katalysators polymerisiert wird, der erhalten wird durch Umsetzung einer Nickel-(O)-Verbindung mit Phosphorverbindungen der Formeln

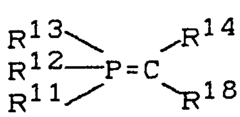 und 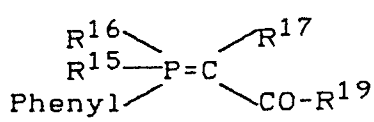 ,

IV) V)

worin

| | |
|---|---|
| $R^{11}$, $R^{12}$ und $R^{13}$ | unabhängig voneinander $C_1$-$C_8$-Alkyl, Phenyl oder Benzyl bedeuten, |
| $R^{14}$ | für Wasserstoff, $C_1$-$C_8$-Alkyl oder Phenyl steht, |
| $R^{15}$, $R^{16}$ und $R^{17}$ | unabhängig voneinander $C_1$-$C_8$-Alkyl oder Phenyl bedeuten, wobei $R^{17}$ zusätzlich Wasserstoff oder Acyl bedeuten kann, |
| $R^{18}$ | Wasserstoff oder Phenyl bedeutet und |
| $R^{19}$ | für Phenyl oder $C_1$-$C_4$-Alkyl steht, |

oder Nickel-Katalysatoren, herstellbar durch Umsetzung einer Nickel-(O)-Verbindung oder einer Verbindung, die in situ in eine Nickel-(O)-Verbindung übergeführt werden kann, mit einem Addukt oder einem

Gemisch aus Benzochinon und einem Phosphin der Formel

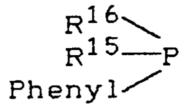 ,

in der $R^{15}$ und $R^{16}$ die genannte Bedeutung haben,
und einer Verbindung der Formel IV).

**3.** Polarisatoren nach Anspruch 2, dadurch gekennzeichnet, daß in Gegenwart eines Nickel-Katalysators polymerisiert wird, der erhalten wird durch Umsetzung einer Nickel-(O)-Verbindung mit Phosphorverbindungen der Formeln

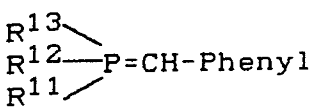

VII)

und

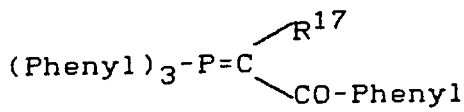 ,

VIII)

worin
$R^{11}$, $R^{12}$, $R^{13}$ und $R^{17}$ die in Anspruch 5 genannte Bedeutung haben,
oder Nickel-Katalysatoren, herstellbar durch Umsetzung einer Nickel-(O)-Verbindung oder einer Verbindung, die in situ in eine Nickel-(O)-Verbindung übergeführt werden kann, mit einem Addukt oder einem Gemisch aus Benzochinon und Triphenylphosphin und einer Verbindung der Formel VII).

**4.** Polarisatoren nach Anspruch 1, die einen Verstreckungsgrad $\epsilon$ von mehr als 300 %, bevorzugt mindestens 500 %, besonders bevorzugt mindestens 600 % haben.

**5.** Polarisatoren nach Anspruch 1, herstellbar bei einer Konzentration von $10^{-1}$ bis $10^{-5}$, bevorzugt $10^{-2}$ bis $10^{-4}$, besonders bevorzugt $0{,}5 \cdot 10^{-3}$ bis $5 \cdot 10^{-3}$ Mol Ni-Katalysator pro Liter Polymerisationsansatz.

**6.** Polarisatoren nach Anspruch 1, bei denen für die Polymerisation eine Dauer von 5 bis 600 Sekunden angesetzt wird.

**7.** Polarisatoren nach Anspruch 1, gekennzeichnet durch ein- oder beidseitig angebrachte Adhäsionsschichten, die Deckschichten tragen können.

## Claims

**1.** Polarizers obtainable by polymerization of acetylene for 5 to 1,000 seconds at 20 to 120 °C in a solution of polyvinyl alcohol in the presence of a nickel catalyst which is obtained by reaction of a nickel-(O) compound or a compound which can be converted in situ into a nickel-(O) compound with phosphorus compounds corresponding to the following formulae:

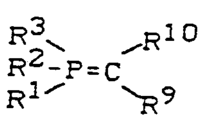

I)

and

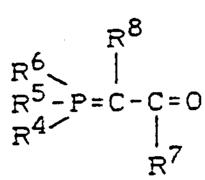 ,

II)

in which

$R^1$, $R^2$ and $R^3$ independently of one another represent $C_{1-20}$ alkyl, $C_{1-20}$ alkoxy, $C_{3-8}$ cycloalkyl, $C_{2-20}$ alkenyl, di-$C_{1-4}$-alkylamino, $C_{6-12}$ aryl, $C_{6-12}$ aryloxy or $C_{7-15}$ aralkyl,

$R^4$ represents $C_{6-12}$ aryl,

$R^5$, $R^6$, $R^7$ and $R^8$ independently of one another represent $C_{1-20}$ alkyl, $C_{1-20}$ alkoxy, $C_{2-20}$ alkenyl, $C_{3-8}$ cycloalkyl, $C_{6-12}$ aryl or $C_{6-12}$ aryloxy and, in addition,

$R^7$ represents hydrogen, $R^8$ represents hydrogen or acyl and

$R^9$ and $R^{10}$ independently of one another represent hydrogen, silyl, acyl, nitrophenyl, cyano or may have the same meaning as $R^1$,

or nickel catalysts obtainable by reaction of a nickel-(O) compound or a compound which can be converted in situ into a nickel-(O) compound with an adduct of a mixture of a quinoid compound and a phosphine corresponding to the following formula:

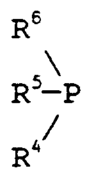

in which $R^4$, $R^5$ and $R^6$ are as defined above,
and a compound corresponding to formula I), processing of the polymer to films and stretching of the films obtained, characterized in that the polyvinyl alcohol solution consists of a solution of a pure polyvinyl alcohol in cyclic N-alkyl-substituted lactams or cyclic N,N'-dialkyl substituted ureas as solvent.

**2.** Polarizers as claimed in claim 1, characterized in that the polymerization is carried out in the presence of a nickel catalyst obtained by reaction of a nickel-(O) compound with phosphorus compounds corresponding to the following formulae:

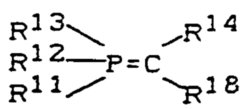

IV)

and

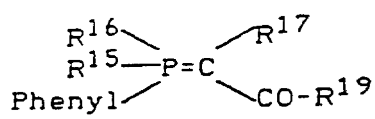

V)

,

in which

$R^{11}$, $R^{12}$ and $R^{13}$ independently of one another represent $C_{1-8}$ alkyl, phenyl or benzyl,

$R^{14}$ represents hydrogen, $C_{1-8}$ alkyl or phenyl,

$R^{15}$, $R^{16}$ and $R^{17}$ independently of one another represent $C_{1-8}$ alkyl or phenyl, in addition to which $R^{17}$ may represent hydrogen or acyl,

$R^{18}$ represents hydrogen or phenyl and

$R^{19}$ represents phenyl or $C_{1-4}$ alkyl,

or nickel catalysts obtainable by reaction of a nickel-(O) compound or a compound which can be converted in situ into a nickel-(O) compound with an adduct or a mixture of benzoquinone and a phosphine corresponding to the following formula:

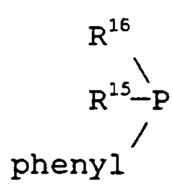

in which $R^{15}$ and $R^{16}$ are as defined above, and a compound corresponding to formula IV).

3. Polarizers as claimed in claim 2, characterized in that the polymerization is carried out in the presence of a nickel catalyst obtained by reaction of a nickel-(O) compound with phosphorus compounds corresponding to the following formulae:

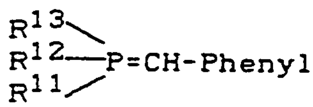

and

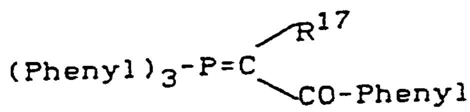

,

VII) VIII)

in which
$R^{11}$, $R^{12}$, $R^{13}$ and $R^{17}$ are as defined in claim 5,
or nickel catalysts obtainable by reaction of a nickel-(O) compound or a compound which can be converted in situ into a nickel-(O) compound with an adduct of a mixture of benzoquinone and triphenyl phosphine and a compound corresponding to formula VII).

4. Polarizers as claimed in claim 1 which have a degree of stretching $\epsilon$ of more than 300%, preferably at least 500% and more preferably at least 600%.

5. Polarizers as claimed in claim 1 obtainable with a concentration of $10^{-1}$ to $10^{-5}$, preferably $10^{-2}$ to $10^{-4}$ and, more preferably, $0.5 \cdot 10^{-3}$ to $5 \cdot 10^{-3}$ mols of Ni catalyst per litre of polymerization mixture.

6. Polarizers as claimed in claim 1, in which a time of 5 to 600 seconds is allowed for the polymerization.

7. Polarizers as claimed in claim 1, characterized by adhesion layers which are applied to one or both sides and which may carry surface layers.

## Revendications

1. Polariseurs, qui peuvent être fabriqués par polymérisation de l'acétylène à 20-120 °C pendant une durée de 5 à 1000 s dans une solution de poly(alcool vinylique) en présence d'un catalyseur à base de nickel qui est obtenu par réaction d'un composé du nickel (0) ou d'un composé qui peut être converti in situ en un composé du nickel (0) avec des composés du phosphore répondant aux formules

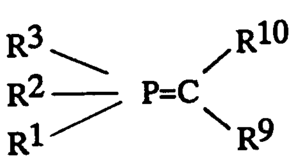

et

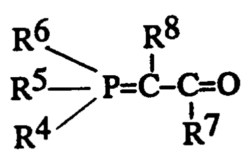

I) II)

dans lesquelles

| | |
|---|---|
| $R^1$, $R^2$ et $R^3$ | représentent indépendamment des groupes alkyle en $C_1$-$C_{20}$, alcoxy en $C_1$-$C_{20}$, cycloalkyle en $C_3$-$C_8$, alcényle en $C_2$-$C_{20}$, dialkylamino en $C_1$-$C_4$, aryle en $C_6$-$C_{12}$, aryloxy en $C_6$-$C_{12}$ ou aralkyle en $C_7$-$C_{15}$, |
| $R^4$ | représente un groupe aryle en $C_6$-$C_{12}$, |
| $R^5$, $R^6$, $R^7$ et $R^8$ | représentent indépendamment des groupes alkyle en $C_1$-$C_{20}$, alcoxy en $C_1$-$C_{20}$, alcényle en $C_2$-$C_{20}$, cycloalkyle en $C_3$-$C_8$, aryle en $C_6$-$C_{12}$ ou aryloxy en $C_6$-$C_{12}$, et en outre |
| $R^7$ | représente l'hydrogène, |
| $R^8$ | représente l'hydrogène ou un groupe acyle, et |
| $R^9$ et $R^{10}$ | peuvent représenter indépendamment l'hydrogène, un groupe silyle, acyle, nitrophényle, cyano ou $R^1$, |

ou bien en présence de catalyseurs à base de nickel qui peuvent être préparés par réaction d'un

composé du nickel (0) ou d'un composé qui peut être converti in situ en un composé du nickel (0) avec un produit d'addition ou un mélange d'un composé quinoïde et d'une phosphine de formule :

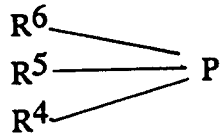

dans laquelle $R^4$, $R^5$ et $R^6$ ont la signification citée, et un composé de formule I), mise du polymérisat sous forme de feuilles et étirage de celles-ci, caractérisés en ce que la solution de pol(alcool vinylique) consiste en une solution d'un poly(alcool vinylique) pur dans des lactames cycliques, N-alkyl-substitués ou dans des urées cycliques N,N'-dialkyl-substituées en tant que solvants.

**2.** Polariseurs selon la revendication 1, caractérisés en ce que la polymérisation est réalisée en présence d'un catalyseur à base de nickel qui est obtenu par réaction d'un composé du nickel (0) avec des composés du phosphore répondant aux formules :

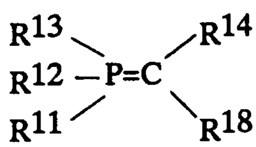

IV)

et

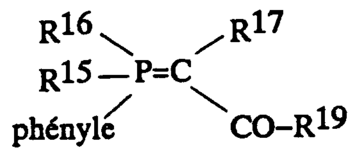

V)

dans lesquelles

| | |
|---|---|
| $R^{11}$, $R^{12}$ et $R^{13}$ | représentent indépendamment des groupes alkyle en $C_1$-$C_8$, phényle ou benzyle, |
| $R^{14}$ | représente l'hydrogène, un groupe alkyle en $C_1$-$C_8$ ou un groupe phényle, |
| $R^{15}$, $R^{16}$ et $R^{17}$ | représentent indépendamment un groupe alkyle en $C_1$-$C_8$ ou un groupe phényle, $R^{17}$ pouvant représenter en outre l'hydrogène ou un groupe acyle, |
| $R^{18}$ | représente l'hydrogène ou un groupe phényle et |
| $R^{19}$ | représente un groupe phényle ou un groupe alkyle en $C_1$-$C_4$, |

ou en présence de catalyseurs à base de nickel qui peuvent être préparés par réaction d'un composé du nickel (0) ou d'un composé qui peut être converti in situ en un composé du nickel (0) avec un produit d'addition ou un mélange de benzoquinone et d'une phosphine de formule :

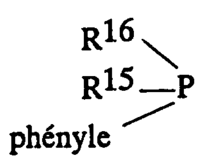

dans laquelle $R^{15}$ et $R^{16}$ ont la signification citée, et un composé de formule IV).

**3.** Polariseurs selon la revendication 2, caractérisés en ce que la polymérisation est réalisée en présence d'un catalyseur à base de nickel qui est obtenu par réaction d'un composé du nickel (0) avec des composés du phosphore répondant aux formules :

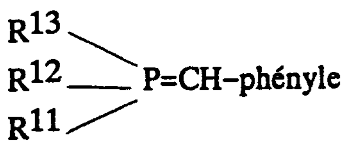 et 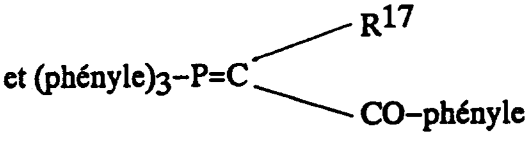

VII) VIII)

dans lesquelles

$R^{11}$, $R^{12}$, $R^{13}$ et $R^{17}$ ont la signification citée dans la revendication 5, ou en présence de catalyseurs à base de nickel qui peuvent être préparés par réaction d'un composé du nickel (0) ou d'un composé qui peut être converti in situ en un composé du nickel (0) avec un produit d'addition ou un mélange de benzoquinone et de triphénylphosphine et un composé de formule VII).

**4.** Polariseurs selon la revendication 1, qui présentent un degré d'étirage $\epsilon$ supérieur à 300 %, de préférence d'au moins 500 %, de préférence encore d'au moins 600 %.

**5.** Polariseurs selon la revendication 1, qui peuvent être fabriqués à une concentration en catalyseur à base de Ni de $10^{-1}$ à $10^{-5}$, de préférence de $10^{-2}$ à $10^{-4}$, de préférence encore de $0{,}5.10^{-3}$ à $5.10^{-3}$ mol par litre de charge de polymérisation.

**6.** Polariseurs selon la revendication 1, dans lesquels une durée de 5 à 600 s est fixée pour la polymérisation.

**7.** Polariseurs selon la revendication 1, caractérisés par l'application, sur un côté ou sur les deux côtés, de couches adhésives qui peuvent porter des couches de recouvrement.